# EUROPÄISCHE PATENTSCHRIFT

(11) **EP 0 597 203 B1**
(45) Veröffentlichungstag und Bekanntmachung des Hinweises auf die Patenterteilung: **02.05.2002**
(21) Anmeldenummer: 93113979.4
(22) Anmeldetag: 01.09.1993
(51) Int. Cl.: G01N 27/30, G01N 27/414

(54) **Referenzelektrode**
Reference electrode
Electrode de référence

(30) Priorität: 14.09.1992 DE 4230691
(43) Veröffentlichungstag der Anmeldung: 18.05.1994
(73) Patentinhaber: SIEMENS AKTIENGESELLSCHAFT, 80333 München (DE)
(72) Erfinder: Gumbrecht, Walter, Dr., D-91074 Herzogenaurach (DE); Schelter, Wolfgang, D-91080 Uttenreuth (DE); Montag, Bernhard, D-91301 Forchheim (DE)

(56) Entgegenhaltungen:
- EP-A- 0 271 101
- EP-A- 0 299 778
- GB-A- 1 597 628
- NL-A- 8 602 569
- NL-A- 8 602 669
- US-A- 5 183 549
- SENSORS AND ACTUATORS, Bd. 15, Nr. 4, Dezember 1988 LAUSANNE, Seiten 337-345, S.YEE ET AL 'MINIATURE LIQUID JUNCTION REFERENCE ELECTRODE WITH MICROMACHINED SILICON CAVITY'
- P.BERGVELD AND A.SIBBALD 'Analytical and biomedical applications of ion-selective field-effect transistors' 1988 , ELSEVIER , AMSTERDAM * Seite 63 - Seite 74 *
- J.JANATA ; R.J.HUBER 'SOLID STATE CHEMICAL SENSORS' 1985 , ACADEMIC PRESS , ORLANDO * Seite 101 - Seite 103 *

## Beschreibung

Die Erfindung betrifft eine Referenzelektrode für chemische Sensoren gemäß dem Oberbegriff des Patentanspruches 1.

Zur Messung von Ionenkonzentrationen, beispielsweise von Ionen wie Na⁺, K⁺ und Ca²⁺, oder des pH-Wertes werden derzeit bevorzugt potentiometrische Meßmethoden angewandt. Dazu wird außer einem ionenselektiven Sensor eine Referenzelektrode benötigt, die während des Meßvorgangs ein konstantes elektrisches Potential liefert. Hierfür werden üblicherweise sogenannte Elektroden zweiter Art eingesetzt, beispielsweise eine Silber/Silberchlorid-Elektrode (Ag/AgCl-Elektrode).

Die Ag/AgCl-Elektrode besteht aus einem mit einer Silberchloridschicht überzogenen Silberdraht, der in eine Elektrolytlösung mit konstanter Chloridionenkonzentration taucht. Die Elektrolytlösung steht dabei über ein Diaphragma, beispielsweise eine poröse Keramik oder ein Glasschliff, in eletrischem Kontakt mit der Meßlösung (siehe dazu beispielsweise: K. Cammann, "Das Arbeiten mit ionenselektiven Elektroden", 2. Auflage, Springer-Verlag Berlin, Heidelberg 1977, Seiten 44 bis 47).

Eine Referenzelektrode mit einem derart komplexen Aufbau ist aber nicht kompatibel mit Ionen- und pH-Sensoren, wie ChemFETs (Chemically sensitive Field Effect Transistors); siehe dazu P. Bergveld und A. Sibbald, "Analytical and Biomedical Applications of Ion-selective Field effect Transistors", Elsevier Science Publishers B.V., Amsterdam 1988, Seiten 63 bis 74 (G. Svehla (Herausgeber), "Comprehensive Analytical Chemistry", Volume XXIII). Deshalb wurde bereits vorgeschlagen, einen gewöhnlichen ISFET (Ion-Sensitive Field Effect Transistor) mit einer Schicht eines ladungsfreien Gels zu bedecken (siehe dazu: J. Janata in J. Janata und R. J. Huber (Herausgeber), "Solid State Chemical Sensors", Academic Press Inc., Orlando 1985, Seiten 101 bis 103). Die Wirkung des Gels besteht dabei darin, die Antwort des ISFET durch Verlängerung des Diffusionsweges zu verlangsamen. Aufgrund der verlangsamten Ionendiffusion im Gel bleibt bei einem schnellen Wechsel (< 1 min) vom Eichmedium auf das Meßmedium das elektrische Potential des Referenz-ChemFET für eine kurze Zeit (ca. 1 min) konstant und kann somit als Referenzpotential dienen.

Eine Weiterbildung eines derartigen Referenzsensors besteht darin, über einem - auf einem Siliciumsubstrat befindlichen - pH-ISFET (pH-sensitiver ISFET) einen Hohlraum auszubilden, der durch eine anodisch gebondete Glasschicht begrenzt wird (siehe dazu: "Analyst", Vol. 113 (1988), Seiten 1029 bis 1033). Dieser Hohlraum, der einen Durchmesser von 500 µm und eine Höhe von 200 µm aufweist, wird mit einem Hydrogel, d.h. hydrophilem Material, gefüllt. Dieser hinsichtlich der Ansprechzeit "gebremste" pH-ISFET kann zwar - in Kombination mit einem beliebigen ISFET - über kurze Zeit (Wechsel Eichmedium/Meßmedium) als Referenzsensor eingesetzt werden, er weist jedoch einige Nachteile auf. So ist der Aufbau, was die Herstellung anbetrifft, an das anodische Bonden einer mit Löchern versehenen Glasscheibe auf einen Si-Wafer gekoppelt, was einerseits kostspielig und andererseits technologisch nicht ausgereift ist. Außerdem müssen bei einer derartigen Anordnung, um eine ausreichende Verzögerung im Ansprechverhalten des "gebremsten ChemFET" zu erreichen, auf dem ChemFET sehr dicke Hydrogelschichten aufgebracht werden, nämlich Schichten mit einer Dicke von ca. 200 µm (in Richtung senkrecht zur Ausdehnungsrichtung des Substrats).

Aus der NL 8 602 669 A ist eine Referenzelektrode der eingangs genannten Art bekannt, bei der eine auf einem planaren Substrat befindliche Ableitelektrode, eine das Substrat im Bereich der Ableitelektrode bedeckende Schicht aus einem strukturierten Polymer mit wenigstens einem als Diffusionskanal dienenden Graben und eine den Graben abdichtende Abdeckung vorhanden sind. Weiterhin ist aus der E? 0 271 101 A1 eine Referenzelektrode bekannt, bei der eine interne gelantonisierte Lösung mit einer hydrophylen dünnen Schicht abgedeckt ist und bei der so ein Diffusionskanal gebildet wird. Schließlich sind aus der EP 0 299 778 A2 und der GB 1 597 628 A elektrochemische Sensoren bekannt, bei denen ebenfalls Referenzelektroden zur Anwendung kommen.

Ausgehend vom Stand der Technik ist es Aufgabe der Erfindung, eine Referenzelektrode für chemische Sensoren, denen eine Messflüssigkeit und eine Kalibrierflüssigkeit zuführbar ist, anzugeben, die ohne aufwendige und mit Nachteilen behaftete technologische Schritte mittels kostengünstiger Standardtechnologien hergestellt werden kann und die keine dicke Diffusionsschicht erfordert.

Die Aufgabe ist erfindungsgemäß durch eine Referenzelektrode mit den Merkmalen des Patentanspruches 1 gelöst. Vorteilhafte Weiterbildungen sind in den abhängigen Ansprüchen angegeben.

Bei der erfindungsgemäßen Referenzelektrode dient als Substrat im allgemeinen ein Siliciumsubstrat, insbesondere ein SI-Wafer; daneben kommen aber auch andere Materialien, wie Aluminiumoxid und Quarz, in Betracht. Auf dem Substrat befindet sich eine sogenannte Ableitelektrode, die beispielsweise aus Edelmetall, wie Platin, bestehen kann; vorteilhaft ist die Ableitelektrode jedoch ein Ionensensor. Als Ionensensor kann insbesondere eine ionensensitive Elektrode dienen, beispielsweise eine Ag/AgCl-Elektrode; vorzugsweise wird zu diesem Zweck aber ein ISFET eingesetzt. Der ISFET selbst kann beispielsweise mit Ag/AgCl beschichtet und damit Cl⁻-sensitiv sein; vorzugsweise ist der ISFET jedoch pH-sensitiv, d.h. er ist ein pH-ISFET.

Auf dem Substrat befindet sich eine Polymerschicht, die im allgemeinen eine Dicke von 5 bis 100 µm aufweist, vorzugsweise ca. 30 µm. Diese Polymerschicht besteht vorzugsweise aus einem Polyimid, daneben kommen aber auch andere strukturierbare Polymermaterialien in Frage, wie Polybenzoxazol. Die Polymerschicht ist im unmittelbaren Bereich der Ableitelektrode strukturiert, um einen Diffusionskanal, d.h. einen ionenleitfähigen Kanal zu erhalten. Über diesen Diffusionskanal steht die Ableitelektrode - beim Betrieb des Sensors - mit der zu analysierenden Flüssigkeit, d.h. der Meßlösung, insbesondere Blut, bzw. mit einer Kalibrierlösung (Eichlösung) in Verbindung. Der Diffusionskanal weist im allgemeinen - insgesamt - eine Höhe von einigen µm, eine Breite von einigen 10 µm und eine Länge von einigen 100 µm auf.

Der Diffusionskanal kann aus einem einzigen Graben, der relativ breit ist, bestehen oder aus mehreren - parallel zueinander verlaufenden - Gräben, die relativ schmal und durch Stege voneinander getrennt sind. Diese Gräben, die durch Strukturierung der Polymerschicht gebildet werden, weisen eine sie abdichtende Abdeckung auf. Dies kann eine starre Abdeckung sein, die mit der Polymerschicht und gegebenenfalls der Diffusionsschicht verklebt ist, vorzugsweise findet jedoch eine Dichtung Verwendung, d.h. ein elastisches Abdichtmaterial, insbesondere ein 0-Ring. Durch einen derartigen Aufbau wird ermöglicht, daß der Kontaktbereich zwischen Lösung und Sensor genügend weit von der Ableitelektrode entfernt liegt, nämlich einige 100 µm. Auf diese Weise erfolgt nach einem Wechsel von der Kalibrierlösung auf die Meßlösung die Diffusion von Ionen der Meßlösung zur Ableitelektrode nur lateral und damit genügend langsam. Ein möglicher hoher elektrischer Widerstand zwischen Referenzelektrode und Sensor wirkt sich dann nicht negativ aus, wenn als Ableitelektrode ein ISFET eingesetzt wird.

Die Diffusion im Diffusionskanal kann außer durch die Kanalgeometrie auch durch eine Diffusionsschicht eingestellt werden. Die Diffusionsschicht besteht vorzugsweise aus Elektrolytlösung (Kalibrierlösung), sie kann aber auch ein Hydrogel sein, das - im Betriebszustand - mit Elektrolytlösung gequollen ist; als Hydrogel dient dabei insbesondere polymeres 2-Hydroxyethylmethacrylat (pHEMA). Zur Herstellung einer derartigen Diffusionsschicht werden die Gräben der Polymerstruktur mit dem Hydrogel gefüllt. Eine bevorzugte Diffusionsschicht kann in der Weise realisiert werden, daß die Gräben mit einem wasserlöslichen Polymer, wie Polyvinylpyrrolidon (PVP), gefüllt werden. Nach der Inbetriebnahme wird dieses Polymer dann durch die Kalibrierlösung aufgelöst und auf diese Weise durch Elektrolytlösung ersetzt. Dadurch ist im Diffusionskanal eine freie Diffusion gewährleistet, d.h. es liegen reine Diffusionspotentiale vor und keine störenden Membranpotentiale, wie Donnan-Potentiale.

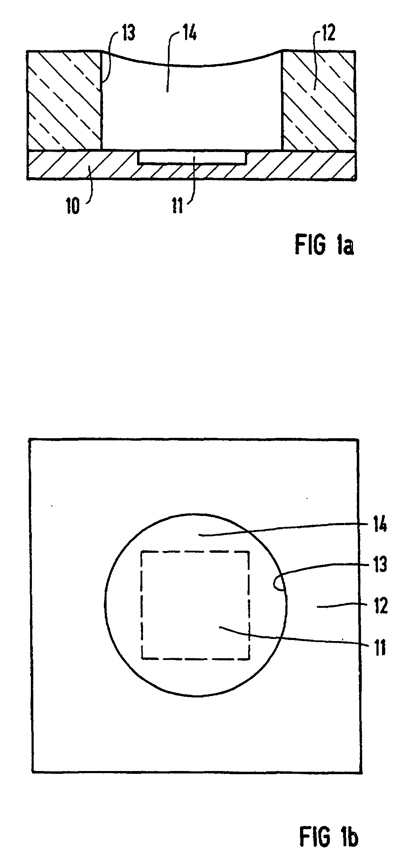

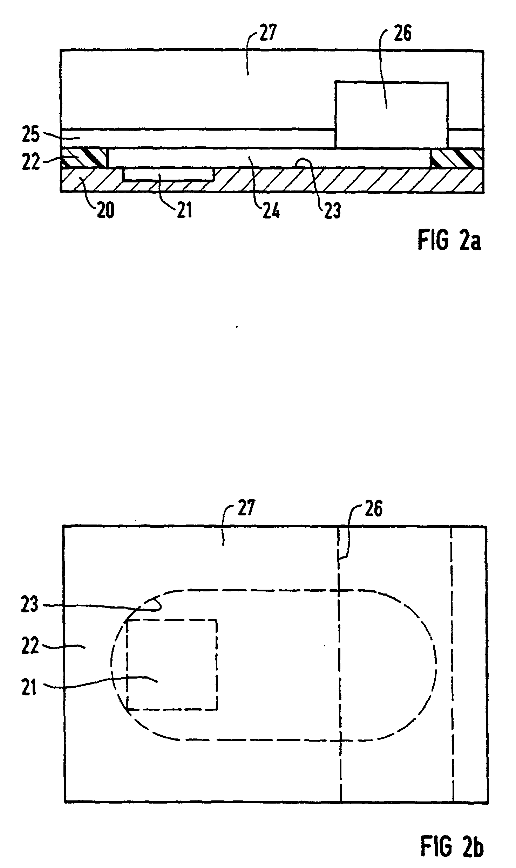

Anhand von Figuren soll die Erfindung noch näher erläutert werden. In den Figuren 1 und 2 sind - jeweils im Schnitt (a) und in Draufsicht (b) - eine planare Referenzelektrode nach dem Stand der Technik bzw. eine planare Referenzelektrode nach der Erfindung dargestellt.

Bei der in Figur 1 wiedergegebenen bekannten Referenzelektrode befindet sich an der Oberfläche eines Siliciumsubstrats 10 ein ISFET 11. Das Siliciumsubstrat 10 ist mit einer Schicht 12 aus Glas versehen. Die Glasschicht 12 weist im Bereich des ISFET 11 ein Loch 13 auf. Das Loch 13 ist mit einem Hydrogel 14 gefüllt, das eine Diffusionsschicht darstellt.

In Figur 2 ist eine bevorzugte Ausführungsform der erfindungsgemäßen Referenzelektrode dargestellt. Auf einem planen Substrat 20, insbesondere einem Siliciumsubstrat, ist eine Ableitelektrode 21, insbesondere ein ISFET, angeordnet, vorzugsweise ein pH-ISFET. Im Bereich der Ableitelektrode 21 ist das Substrat 20 mit einer Schicht 22 aus einem Polymer versehen, insbesondere aus Polyimid. Die Polymerschicht 22 ist strukturiert und weist einen Graben 23 auf, der als Diffusionskanal dient. Dazu ist der Graben 23 mit einem wasserlöslichen Polymer 24, wie Polyvinylpyrrolidon, gefüllt und mit einer Abdeckung 25 versehen, durch die er abgedichtet wird. Der Graben 23 erstreckt sich in lateraler Richtung, d.h. parallel zur Oberfläche des Substrats 20, und stellt eine Verbindung zwischen der Ableitelektrode 21 und einem Durchflußkanal 26 dar, der zu einem - in der Figur nicht dargestellten - chemischen Sensor führt. Der Durchflußkanal 26 wird im wesentlichen durch eine Aussparung in einem Gehäuse 27 gebildet.

## Patentansprüche

1. Referenzelektrode für chemische Sensoren, denen eine Messflüssigkeit und eine Kalibrierflüssigkeit zuführbar ist, wobei
- eine auf einem planaren Substrat (20) befindliche Ableitelektrode (21),
- eine das Substrat (20) im Bereich der Ableitelektrode (21) bedeckende Schicht (22) aus einem strukturierten Polymer mit wenigstens einem als Diffusionskanal dienenden Graben (23), wobei die Diffusion im Diffusionskanal durch die Kanalgeometrie und/oder eine Diffusionsschicht bestimmt wird und
- eine den Graben abdichtende Abdeckung (25) vorhanden sind, **gekennzeichnet durch** folgende weiteren Merkmale:
- der Graben (23) erstreckt sich in lateraler Richtung von der Ableitelektrode (21) zu einem Durchflusskanal (26) für die dem chemischen Sensor zuzuführende Messflüssigkeit bzw. Kalibrierflüssigkeit und
- es ist ein Gehäuse (27) vorhanden, das die Anordnung aus Substrat (20), Ableitelektrode (21), Graben (23) und Durchflusskanal (26) abschließt und eine Aussparung enthält, die den Durchflusskanal (26) bildet.

2. Referenzelektrode nach Anspruch 1, **dadurch gekennzeichnet, dass** eine elastische Abdeckung (25) vorhanden ist.

3. Referenzelektrode nach Anspruch 1, **dadurch gekennzeichnet, dass** die Ableitelektrode (21) ein Ionensensor ist.

4. Referenzelektrode nach Anspruch 3, **dadurch gekennzeichnet, dass** der Ionensensor eine ISFET ist, insbesondere ein pH-ISFET.

5. Referenzelektrode nach einem der Ansprüche 1 bis 4, **dadurch gekennzeichnet , dass** die Polymerschicht (22) eine Dicke von 5 bis 100 um vorzugsweise etwa 30 µm aufweist.

6. Referenzelektrode nach einem oder mehreren der Ansprüche 1 bis 5, **dadurch gekennzeichnet, dass** das Polymer ein Polyimid ist.

7. Referenzelektrode nach einem oder mehreren der Ansprüche 1 bis 6, **dadurch gekennzeichnet, dass** der Graben (23) mit einem wasserlöslichen Polymer (24) gefüllt ist.

8. Referenzelektrode nach Anspruch 7, **dadurch gekennzeichnet, dass** das Polymer Polyvinylpyrrolidon ist.

## Claims

1. A reference electrode for chemical sensors, to which a liquid to be measured and a calibrating liquid are capable of being supplied, wherein
- a discharge electrode (21) situated on a planar substrate (20),
- a layer (22) consisting of a structured polymer with at least one trench (23) which serves as a diffusion channel and covering the substrate (20) in the region of the discharge electrode (21),
- whereby the diffusion in the diffusion channel is determined by the geometry of the channel and/or by a diffusion layer and
- a covering (25) sealing off the trench are present, **characterised by** the following further features:
- the trench (23) extends in the lateral direction from the discharge electrode (21) to a flow channel (26) for the liquid to be measured or the calibrating liquid which is to be supplied to the chemical sensor and
- a housing (27) is present which closes off the arrangement consisting of substrate (20), discharge electrode (21), trench (23) and flow channel (26) and contains a recess which forms the flow channel (26).

2. Reference electrode according to Claim 1, **characterised in that** an elastic covering (25) is present.

3. Reference electrode according to Claim 1, **characterised in that** the discharge electrode (21) is an ion-sensor.

4. Reference electrode according to Claim 3, **characterised in that** the ion-sensor is an ISFET, in particular a pH-ISFET.

5. Reference electrode according to one of Claims 1 to 4, **characterised in that** the polymer layer (22) has a thickness from 5 to 100 µm, preferably about 30 µm.

6. Reference electrode according to one of Claims 1 to 5, **characterised in that** the polymer is a polyimide.

7. Reference electrode according to one of Claims 1 to 6, **characterised in that** the trench (23) is filled with a water-soluble polymer (24).

8. Reference electrode according to Claim 7, **characterised in that** the polymer is polyvinylpyrrolidone.

## Revendications

1. Electrode de référence pour des capteurs chimiques auxquels peut être apporté un liquide de mesure et un liquide d'étalonnage et dans laquelle il y a
- une électrode (21) d'évacuation se trouvant sur un substrat (20) planaire,
- une couche (22) en un polymère structuré qui recouvre le substrat dans la partie de l'électrode (21) d'évacuation et qui a au moins un sillon (23) servant de canal de diffusion, la diffusion dans le canal de diffusion étant déterminée par la géométrie du canal et/ou par la couche de diffusion et
- un recouvrement (25) recouvrant le sillon de manière étanche,
**caractérisée par** les autres caractéristiques suivantes :
- le sillon (23) s'étend, en direction latérale, de l'électrode (21) d'évacuation à un canal (26) de passage du liquide à mesurer ou du liquide d'étalonnage à envoyer au capteur chimique et
- il y a un boîtier (27) qui ferme l'agencement constitué du substrat (20), de l'électrode (21) d'évacuation, du sillon (23) et du canal (26) de passage et qui comporte un évidement qui forme le canal (26) de passage.

2. Electrode de référence suivant la revendication 1, **caractérisée en ce qu'**il y a un recouvrement (25) élastique.

3. Electrode de référence suivant la revendication 1, **caractérisée en ce que** l'électrode (21) d'évacuation est un capteur d'ions.

4. Electrode de référence suivant la revendication 3, **caractérisée en ce que** le capteur d'ions est un ISFET et notamment un ISFET de type p.

5. Electrode de référence suivant l'une des revendications 1 à 4, **caractérisée en ce que** la couche (22) de polymère a une épaisseur de 5 à 100 µm et de préférence d'environ 30 µm.

6. Electrode de référence suivant l'une ou plusieurs des revendications 1 à 5, **caractérisée en ce que** le polymère est un polyimide.

7. Electrode de référence suivant l'une ou plusieurs des revendications 1 à 6, **caractérisée en ce que** le sillon (23) est empli d'un polymère (24) soluble dans l'eau.

8. Electrode de référence suivant la revendication 7, **caractérisée en ce que** le polymère est de la polyvinylpyrrolidone.
